# EUROPEAN PATENT APPLICATION

(11) **EP 4 597 290 A1**
(43) Date of publication of application: **06.08.2025**
(21) Application number: 25151720.7
(22) Date of filing: 14.01.2025
(51) Int. Cl.: G06F 3/12, H04N 1/00

(54) **IMAGE FORMING DEVICE AND INFORMATION TRANSMISSION SYSTEM**

(30) Priority: 01.02.2024 JP 2024014336
(71) Applicant: Toshiba TEC Kabushiki Kaisha, Tokyo 141-8562 (JP)
(72) Inventor: Takeuchi, Kosuke, 141-8562 Shinagawa-ku, Tokyo (JP)
(74) Representative: Hoffmann Eitle

(57) **Abstract**

According to one embodiment, provided is an image forming device and an information transmission system that can efficiently perform failure prediction or maintenance for a printer device at low cost. According to an embodiment, the image forming device includes a first communication interface, a second communication interface, and a processor. The first communication interface communicates with a printer device to be maintained. The second communication interface communicates with a center server that manages maintenance information for the printer device. According to machine body information received from the printer device through the first communication interface, the processor transmits the maintenance information about the printer device created based on the machine body information to the center server through the second communication interface.

## Description

### CROSS-REFERENCE TO RELATED APPLICATION

This application is based upon and claims the benefit of priority from Japanese Patent Application No. 2024-014336, filed on February 1, 2024, the entire contents of which are incorporated herein by reference.

### FIELD

Embodiments described herein relate generally to an image forming device and an information transmission system.

### BACKGROUND

In the related art, a printer device such as a label printer displays an error code on a display provided in a machine body if there is a failure in the machine body. In the case of a printer device that does not have a configuration for notifying a service center of an error, if a user cannot solve a problem by the user, the user requests a serviceman to repair the device or the like. In this case, the serviceman who received notification from the user directly diagnoses the printer device to determine a failure part or replace or repair a part.

However, in the maintenance method described above, it takes a considerable amount of time and effort from when the error occurs up to when the serviceman actually repairs the printer device. Therefore, there is a demand for a system that can efficiently perform failure prediction, maintenance, or the like, at low cost, for a printer device that does not have a configuration for notifying a service center of an error.

### SUMMARY OF THE INVENTION

One of the objects of the present invention is to improve prior art techniques and overcome at least some of the prior art problems as for instance above illustrated.

According to a first aspect of the present invention, it is provided an image forming device, comprising a first communication interface configured to communicate with a printer device to be maintained; a second communication interface configured to communicate with a center server that manages maintenance information for the printer device; and a processor configured to transmit, according to machine body information received from the printer device through the first communication interface, the maintenance information about the printer device created based on the machine body information sent to the center server through the second communication interface.

Optionally, in the image forming device according to the first aspect of the invention, the printer device is a label printer.

Optionally, in the image forming device according to the first aspect of the invention, the processor transmits, to the center server, data obtained by encrypting the maintenance information about the printer device in a manner allowing the center server to decrypt the maintenance information.

Optionally, the image forming device according to the first aspect of the invention further comprises a display, wherein the processor displays a warning, which is based on the machine body information, on the display according to the machine body information received from the printer device.

Optionally, in the image forming device according to the first aspect of the invention, the maintenance information is based on a failure prediction in the printer device.

Optionally, in the image forming device according to the first aspect of the invention, the first communication interface is configured to communicate with a plurality of printer devices to be maintained.

According to a second aspect of the invention, it is provided a communication method, comprising communicating with a printer device to be maintained through a first communication interface; communicating with a center server that manages maintenance information for the printer device through a second communication interface; and transmitting, via a processor, according to machine body information received from the printer device through the first communication interface, the maintenance information about the printer device created based on the machine body information sent to the center server through the second communication interface.

Optionally, in the communication method according to the second aspect of the invention, the printer device is a label printer.

Optionally, the communication method according to the second aspect of the invention further comprises transmitting, to the center server, data obtained by encrypting the maintenance information about the printer device in a manner allowing the center server to decrypt the maintenance information.

Optionally, the communication method according to the second aspect of the invention further comprises displaying a warning, which is based on the machine body information, on a display according to the machine body information received from the printer device.

Optionally, in the communication method according to the second aspect of the invention, the maintenance information is based on a failure prediction in the printer device.

Optionally, the communication method according to the second aspect of the invention further comprises communicating with a plurality of printer devices to be maintained.

According to a third aspect of the invention, it is provided an information transmission system, comprising: an image forming device; and a printer device, wherein the image forming device includes a first communication interface configured to communicate with the printer device to be maintained, a second communication interface configured to communicate with a center server that manages maintenance information for the printer device, and a first processor configured to transmit, according to machine body information including information indicating an operation state of the printer device that is received from the printer device through the first communication interface, maintenance information about the printer device created based on the machine body information sent to the center server through the second communication interface, and the printer device includes a third communication interface configured to communicate with the image forming device, and a second processor configured to transmit the machine body information to the image forming device through the third communication interface.

Optionally, the information transmission system according to the third aspect of the invention comprises a plurality of printer devices, each printer device includes a third communication interface configured to communicate with the image forming device, and a second processor configured to transmit the machine body information to the image forming device through the third communication interface.

Optionally, in the information transmission system according to the third aspect of the invention, the printer device is a label printer.

Optionally, in the information transmission system according to the third aspect of the invention, the first processor transmits, to the center server, data obtained by encrypting the maintenance information about the printer device in a manner allowing the center server to decrypt the maintenance information.

Optionally, in the information transmission system according to the third aspect of the invention further comprises a display, wherein the processor displays a warning, which is based on the machine body information, on the display according to the machine body information received from the printer device.

Optionally, in the information transmission system according to the third aspect of the invention, the maintenance information is based on a failure prediction in the printer device.

Optionally, in the information transmission system according to the third aspect of the invention, the first communication interface is configured to communicate with a plurality of printer devices to be maintained.

### DESCRIPTION OF THE DRAWINGS

FIG. 1 is a diagram illustrating a configuration example of an information transmission system including a digital multi-functional peripheral serving as an image forming device according to an embodiment;
FIG. 2 is a block diagram illustrating a configuration example of the digital multi-functional peripheral;
FIG. 3 is a block diagram illustrating a configuration example of a label printer serving as a printer;
FIG. 4 is a block diagram illustrating a configuration example of a center server;
FIG. 5 is a flowchart illustrating an operation example of the digital multi-functional peripheral; and
FIG. 6 is a flowchart illustrating an operation example of the label printer.

### DETAILED DESCRIPTION

An aspect of embodiments described herein is to provide an image forming device and an information transmission system capable of efficiently performing failure prediction or maintenance for a printer device at low cost.

According to an embodiment, the image forming device includes a first communication interface, a second communication interface, and a processor. The first communication interface communicates with a printer device to be maintained. The second communication interface communicates with a center server that manages maintenance information for the printer device. According to machine body information received from the printer device through the first communication interface, the processor transmits the maintenance information about the printer device created based on the machine body information to the center server through the second communication interface.

Hereinafter, an embodiment will be described with reference to the drawings.

First, a configuration of an information transmission system 1 which is an example of an information transmission system including a digital multi-functional peripheral 3 serving as an image forming device according to an embodiment will be described.

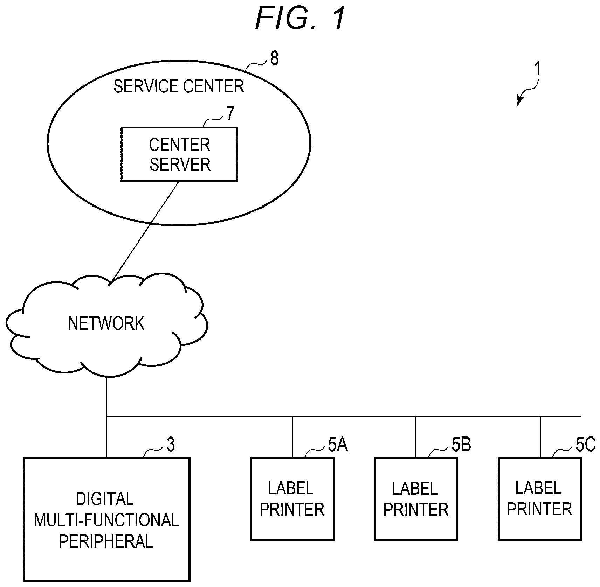

FIG. 1 is a diagram illustrating a configuration example of the information transmission system 1 according to the embodiment.

The information transmission system 1 includes the digital multi-functional peripheral (MFP) 3 serving as an image forming device, label printers 5 (5A, 5B, and 5C) serving as printer devices to be managed, and a center server 7.

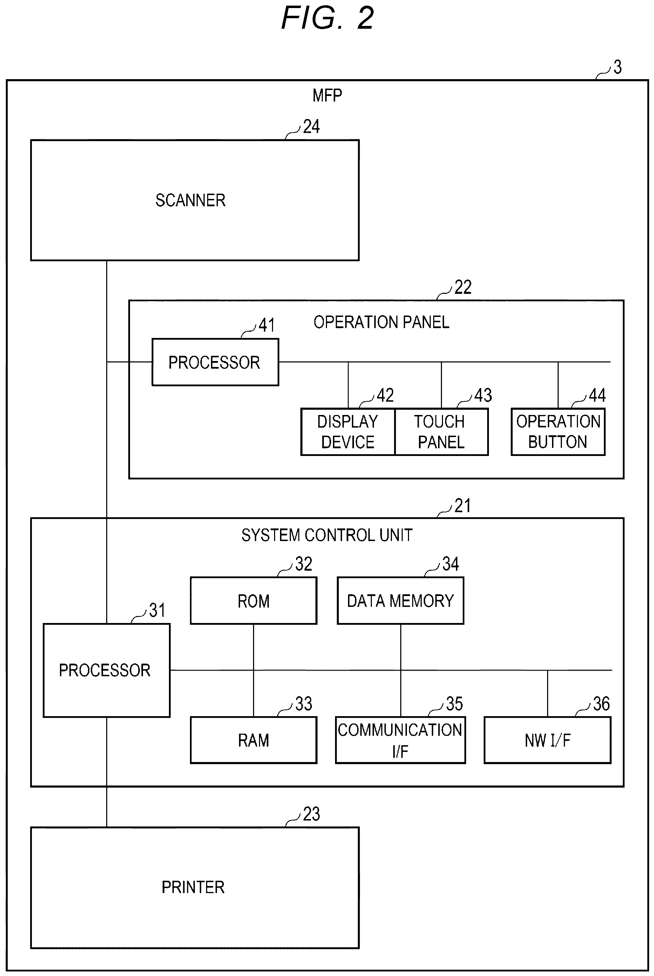

The digital multi-functional peripheral 3 is, for example, an image forming device installed in a work area or the like. The digital multi-functional peripheral 3 includes a system control unit (system controller) 21 having a communication function, an operation panel 22, a printer 23, and a scanner 24 (see FIG. 2). The system control unit 21 of the digital multi-functional peripheral 3 has a communication interface for communicating with the label printers 5 (5A, 5B, 5C). For example, the digital multi-functional peripheral 3 is connected to each of the label printers 5 in the work area by a communication interface. The system control unit 21 of the digital multi-functional peripheral 3 includes a communication interface for communicating with the center server 7. The digital multi-functional peripheral 3 is connected to the center server 7 in a manner that the digital multi-functional peripheral 3 can communicate with the center server 7 via a network through the communication interface.

The digital multi-functional peripheral 3 has a maintenance function of appropriately notifying the center server 7 of maintenance information based on failure prediction in each unit of an own machine body (own machine) . The digital multi-functional peripheral 3 further has a function of acquiring machine body information from each label printer 5. The digital multi-functional peripheral 3 performs failure prediction or the like for each unit in each label printer based on the machine body information acquired from each label printer. The digital multi-functional peripheral 3 uses the maintenance function to notify the center server 7 of maintenance information about the label printer created based on a result of the failure prediction for each label printer.

The label printers 5 (5A, 5B, 5C) are examples of a printer device to be maintained. In the present embodiment, the label printer 5 serving as an example of a printer device to be maintained has a printing mechanism that prints an image on a label using a thermal method. In general, the label printer 5 is often manufactured with a simple configuration in order to reduce manufacturing cost. Therefore, in an actual operation, it may be difficult to provide a configuration for the label printer 5 to communicate securely with the center server 7 via a network.

However, the information transmission system 1 according to the present embodiment is not limited to a label printer or a thermal printer in which a printer device to be maintained performs printing on a label. The printer device to be maintained may have a configuration that transmits own machine body information to the digital multi-functional peripheral 3. For example, the printer device may have a printing mechanism of an image forming method other than a thermal method, such as an ink jet method.

The center server 7 is provided in a service center 8 that provides a service such as maintenance and repair for the digital multi-functional peripheral 3 and the label printers 5. In the service center 8, the center server 7 has a function of communicating with the digital multi-functional peripheral 3 via a network. The center server 7 acquires not only maintenance information about the digital multi-functional peripheral 3 from the digital multi-functional peripheral 3, but also maintenance information about the label printers 5 connected to the digital multi-functional peripheral 3.

The center server 7 has a function of notifying a serviceman of information, the serviceman performs a service such as maintenance work (maintenance) for the label printer 5, for example, repairing and replacement for the label printer 5. For example, the center server 7 presents the maintenance information about the label printer 5 or the digital multi-functional peripheral 3 to a terminal device carried by the serviceman. Accordingly, the serviceman can check the maintenance information about the label printer 5 or the digital multi-functional peripheral 3 to perform maintenance for the label printer 5 or the digital multi-functional peripheral 3.

Next, a configuration of the digital multi-functional peripheral 3 serving as the image forming device according to the embodiment will be described.

FIG. 2 is a block diagram illustrating a configuration example of the digital multi-functional peripheral 3 serving as the image forming device according to the embodiment.

As illustrated in FIG. 2, the digital multi-functional peripheral 3 includes the system control unit (system controller) 21, the operation panel 22, the printer 23, and the scanner 24.

The system control unit 21 controls the entire digital multi-functional peripheral 3. The system control unit 21 includes a processor 31, a ROM 32, a RAM 33, a data memory 34, a communication interface (I/F) 35, a network (NW) interface (I/F) 36, and the like.

The processor 31 achieves various kinds of processing functions by executing programs. The processor 31 is, for example, a CPU. The processor 31 is connected to a processor 41 of the operation panel 22, the printer 23, the scanner 24, and the like via an internal interface.

The ROM 32 functions as a program memory for storing a program. The ROM 32 is a non-rewritable nonvolatile memory. The RAM 33 functions as a working memory or a buffer memory. The processor 31 executes various kinds of processing by executing programs stored in the ROM 32 or the data memory 34 using the RAM 33.

The data memory 34 is a rewritable nonvolatile memory. For example, the data memory 34 is implemented by a storage device such as a hard disk drive (HDD) or a solid state drive (SSD). The data memory 34 stores various kinds of data such as control data, an application program (hereinafter also referred to as an application), setting information, and image data.

The communication interface 35 is a communication interface (first communication interface) for performing data communication with the label printer 5 (5A, 5B, 5C), serving as the printer device to be maintained. The communication interface 35 may be an interface that communicates with each label printer 5 via a local area network by, for example, wireless or wired communication.

The NW interface 36 is a communication interface (second communication interface) for performing data communication with the center server 7. The NW interface 36 communicates with the center server 7 via a network.

The operation panel 22 is a user interface. The operation panel 22 includes the processor 41, a display device 42, a touch panel (operation device) 43, and an operation button (operation device) 44. The display device 42 is a display that displays operation guidance and the like. The touch panel 43 is provided on a display screen of the display device 42. The touch panel 43 detects a portion touched by a user on the display screen of the display device 42. The operation button 44 is a button for inputting a predetermined instruction.

The processor 41 of the operation panel 22 controls the operation panel 22. The processor 41 achieves various kinds of processing by executing programs stored in an internal memory or an external memory. The processor 41 is connected to the processor 31 of the system control unit 21, and controls the operation panel 22 according to an instruction from the processor 31 of the system control unit 21. For example, the processor 41 controls a display content to be displayed on the display device 42 according to an instruction from the processor 31 of the system control unit 21. The processor 41 detects an input to the touch panel 43 and the operation button 44 and supplies information indicating an input content to the processor 31 of the system control unit 21.

The printer 23 forms an image on a medium (image formation medium) such as paper. For example, the printer 23 prints a printing image supplied from the system control unit 21 on paper taken out from a paper feeding cassette. The printer 23 may form an image using any image forming method. For example, the printer 23 may print an image on a medium by an electrophotographic method or may print an image on a medium by an ink jet method.

The scanner 24 is a device that reads an image from a document. The scanner 24 is installed, for example, on an upper portion of a main body of the digital multi-functional peripheral 3. The scanner 24 optically reads an image from a document set on a document glass or a document set on an auto document feeder (ADF). The scanner 24 outputs image data of the document as a result of reading the image from the document.

Next, a configuration of the label printer 5 serving as the printer device in the information transmission system 1 according to the embodiment will be described.

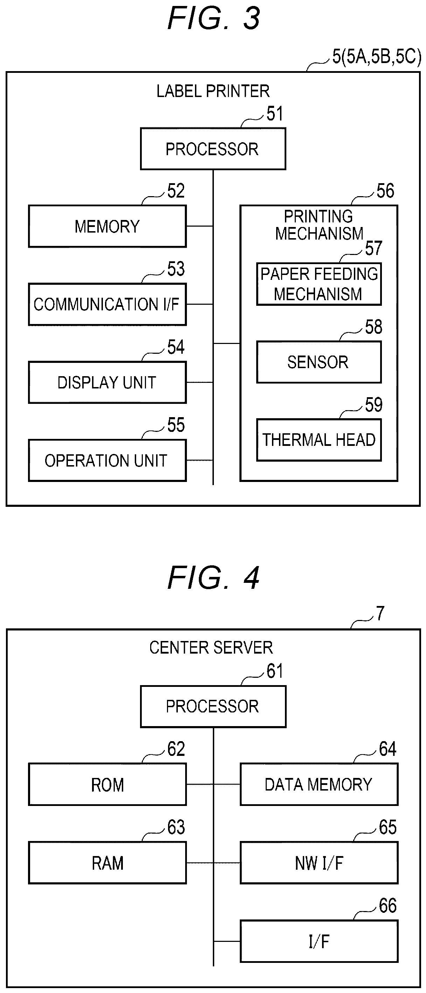

FIG. 3 is a block diagram illustrating a configuration example of the label printer 5 serving as the printer device in the information transmission system 1 according to the embodiment.

As illustrated in FIG. 3, the label printer 5 includes a processor (second processor) 51, a memory 52, a communication interface (I/F) 53, a display unit 54, an operation unit 55, a printing mechanism 56, and the like.

The processor 51 executes programs for executing various kinds of processing. The processor 51 is, for example, a CPU. The processor 51 is connected to each unit in the label printer 5 via an internal interface. The processor 51 executes various kinds of processing by executing programs stored in the memory 52.

The memory 52 includes, for example, a ROM, a RAM, and a data memory. The ROM of the memory 52 is a non-rewritable nonvolatile memory, and stores a preset program, control data, and the like. The RAM of the memory 52 functions as a working memory or a buffer memory. The data memory of the memory 52 is a rewritable nonvolatile memory and stores data such as a program, control data, and setting information. The data memory of the memory 52 stores information acquired from each unit such as the printing mechanism 56 as machine body information.

The communication interface 53 is a communication interface (third communication interface) for communicating with the digital multi-functional peripheral 3. The communication interface 53 may include an interface of a communication system corresponding to a communication interface provided in the digital multi-functional peripheral 3.

The display unit 54 is a display that displays operation guidance and the like. For example, the display unit 54 is implemented by a liquid crystal display device or an organic EL. The operation unit 55 receives an operation from a user. For example, the operation unit 55 is implemented by a group of buttons to be pressed by a user. The operation unit 55 may be implemented by a touch panel provided on a display screen of the display unit 54.

The printing mechanism 56 prints an image on a medium. In the configuration example illustrated in FIG. 3, the printing mechanism 56 is a printing unit of a thermal method including a paper feeding mechanism 57, a sensor 58, a thermal head 59, and the like. In the printing mechanism 56, the paper feeding mechanism 57 feeds paper (medium) as a label. The sensor 58 detects paper (medium) fed by the paper feeding mechanism 57 at a predetermined position (for example, a printing position or near a printing position). The thermal head 59 is driven and controlled according to an image to be printed, and prints an image on the paper fed by the paper feeding mechanism 57. The printing mechanism 56 may be provided with a sensor for detecting various kinds of failure such as a paper jam.

The printing mechanism 56 is operated according to an instruction from the processor 51, and supplies information indicating an operation state of each unit, a detection result of a sensor, and the like to the processor 51. The processor 51 supplies an operation instruction to the printing mechanism 56, and also stores information from the printing mechanism 56 as the machine body information in the memory 52 or transmits the information to the digital multi-functional peripheral 3.

The machine body information about the label printer 5 includes, for example, information indicating an operation state of the printing mechanism 56 such as a total printing distance, sensor detection information, an ON time of the thermal head, and a driving time of a motor. As a specific example, each time the processor 51 executes printing processing, the processor 51 acquires information such as a printing distance (or a length of fed paper), sensor detection information, and an ON time of the thermal head from the printing mechanism 56. The processor 51 may store a total printing distance obtained by integrating a printing distance acquired for each printing processing in the memory 52 as the machine body information. Further, the processor 51 may store, in the memory 52, a total time (total printing time) if the sensor 58 detects paper at a predetermined position based on detection information about the sensor 58 acquired for each printing processing as the machine body information. The processor 51 may store an integrated time obtained by integrating an ON time of the thermal head 59 acquired for each printing processing in the memory 52 as the machine body information.

Next, a configuration of the center server 7 in the information transmission system 1 according to the embodiment will be described.

FIG. 4 is a block diagram illustrating a configuration example of the center server 7 in the information transmission system 1 according to the embodiment.

As illustrated in FIG. 4, the center server 7 includes a processor 61, a ROM 62, a RAM 63, a data memory 64, an NW interface (I/F) 65, an interface 66, and the like.

The processor 61 executes programs for executing various kinds of processing. The processor 61 is, for example, a CPU. The processor 61 is connected to each unit in the center server 7 via an internal interface. The processor 61 executes various kinds of processing by executing programs stored in the ROM 62 or the data memory 64 using the RAM 63.

The ROM 62 is a non-rewritable nonvolatile memory. The ROM 62 stores a preset program, control data, and the like. The RAM 63 functions as a working memory or a buffer memory.

The data memory 64 is a rewritable nonvolatile memory. The data memory 64 stores various kinds of data including a program, control data, setting information, and the like. In the present embodiment, the data memory 64 stores information acquired from the digital multi-functional peripheral 3. The data memory 64 stores maintenance information about the digital multi-functional peripheral and maintenance information about each label printer 5 connected to the digital multi-functional peripheral 3 as the information acquired from the digital multi-functional peripheral 3. For example, the data memory 64 stores maintenance information in association with identification information for identifying the digital multi-functional peripheral 3 and each label printer 5.

The NW interface 65 is a communication interface for communicating with the digital multi-functional peripheral 3 via a network.

The interface 66 is an interface for connecting to a device that presents information to a serviceman. For example, the interface 66 transmits maintenance information about the label printer 5 or the digital multi-functional peripheral 3 stored in the data memory 64 to a terminal device carried by the serviceman. The interface 66 may be an interface for displaying the maintenance information about the label printer 5 or the digital multi-functional peripheral 3 stored in the data memory 64 on a display device.

Next, an operation of the digital multi-functional peripheral 3 serving as the image forming device in the information transmission system 1 according to the embodiment will be described.

It is assumed that an application program (maintenance application) for transmitting maintenance information to the center server 7 is installed in the digital multi-functional peripheral 3. The maintenance application is a program installed in the data memory 34 and executed by the processor 31. By executing the maintenance application, the processor 31 of the digital multi-functional peripheral 3 executes maintenance processing on noy only the multi-functional peripheral 3 but also the label printer 5 that is communicably connected to the digital multi-functional peripheral 3.

Processing of transmitting the maintenance information about the label printer 5 to the center server 7 by the digital multi-functional peripheral 3 (label printer maintenance processing) will be described below.

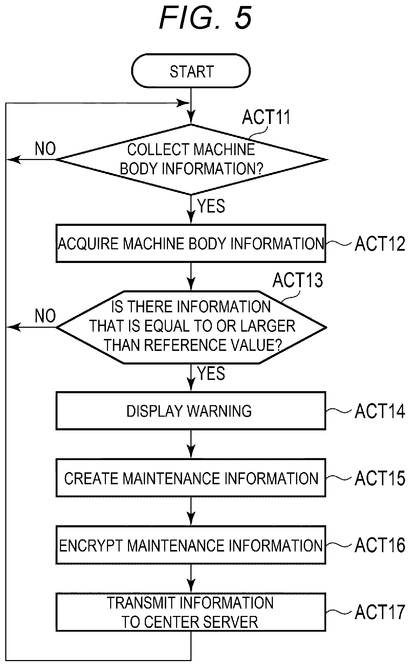

FIG. 5 is a flowchart illustrating an operation example of maintenance processing of the label printer 5 executed by the digital multi-functional peripheral 3 serving as the image forming device according to the embodiment.

The processor 31 of the digital multi-functional peripheral 3 executes maintenance processing on the label printer 5 by executing the maintenance application. The processor 31 of the digital multi-functional peripheral 3 determines whether to collect machine body information from the label printer 5 that can communicate with the digital multi-functional peripheral 3 via the communication interface 35 (ACT 11).

Here, it is assumed that the machine body information about the label printer 5 is transmitted from the label printer 5 to the digital multi-functional peripheral 3 in response to a request from the digital multi-functional peripheral 3. In this case, the processor 31 determines whether to collect the machine body information from the label printer 5 depending on whether it is a timing for collecting the machine body information. The timing for collecting the machine body information may be every predetermined period (for example, every hour or every day), or may be a timing at which the label printer 5 performs a predetermined operation. The timing for collecting the machine body information may be a timing when a user instructs to collect the machine body information about the label printer 5 using the operation device 43.

If the processor 31 of the digital multi-functional peripheral 3 determines to collect the machine body information about the label printer 5 (ACT 11, YES), the processor 31 requests the machine body information from the label printer 5. The processor 31 of the digital multi-functional peripheral 3 acquires the machine body information output from the label printer 5 in response to the request for the machine body information (ACT 12).

The machine body information about the label printer 5 may be transmitted from the label printer 5 regardless of the request from the digital multi-functional peripheral 3. For example, the label printer 5 may transmit the machine body information to the digital multi-functional peripheral 3 each time printing processing is executed or every predetermined period (for example, every hour, every day). In this case, the processor 31 of the digital multi-functional peripheral 3 may receive information from the label printer 5 at any time and acquire the machine body information transmitted from the label printer 5.

If the processor 31 of the digital multi-functional peripheral 3 acquires the machine body information about the label printer 5, the processor 31 stores the acquired machine body information in the data memory 64 for each label printer 5. For example, if new machine body information is acquired from the label printer 5, the processor 31 updates the machine body information for each label printer 5 stored in the data memory 64.

If the machine body information about the label printer is updated, the processor 31 determines whether there is information (item) that is equal to or larger than a predetermined reference value in the updated machine body information (ACT 13). Here, it is assumed that the reference value for each item included in the machine body information about the label printer is stored in a memory such as the data memory 34. The reference value may be appropriately set by a serviceman or an administrator.

If there is information that is equal to or larger than the reference value in the machine body information (ACT 13, YES), the processor 31 displays, on the display device 42, guidance for warning that there is information that is equal to or larger than the reference value (ACT 14). For example, the processor 31 displays, as a warning on the display device 42, information indicating the information (item) that is equal to or larger than the reference value and a label printer having the machine body information that is equal to or larger than the reference value. In addition, the processor 31 may display, as a warning on the display device 42, information indicating a state of a label printer predicted based on the information that is equal to or larger than the reference value (whether a component replacement is necessary, the degree of wear of a component, a predicted failure, and the like).

If there is information that is equal to or larger than the reference value in the machine body information (ACT 13, YES), the processor 31 creates maintenance information for notifying the center server 7 of a state of a corresponding label printer (ACT 15). For example, the processor 31 creates maintenance information about a label printer in a predetermined format. The maintenance information includes information that is equal to or larger than the reference value and information indicating a label printer having machine body information that is equal to or larger than the reference value. In addition, the maintenance information may be information including all pieces of machine body information including the information that is equal to or larger than the reference value.

If the processor 31 creates the maintenance information about the label printer, the processor 31 encrypts the created maintenance information in a manner that can be decrypted by the center server 7 (ACT 16). For example, the processor 31 encrypts the maintenance information about the label printer using key information exchanged with the center server 7 by performing mutual authentication with the center server 7.

After encrypting the maintenance information about the label printer, the processor 31 transmits the encrypted maintenance information to the center server 7 (ACT 17). The center server 7 receives the encrypted maintenance information from the digital multi-functional peripheral 3 via the network. The center server 7 can acquire information indicating an operation state of the label printer including information that is equal to or larger than the reference value by decrypting the encrypted maintenance information from the digital multi-functional peripheral 3.

By the above processing, the center server 7 can manage the machine body information about the label printer acquired from the digital multi-functional peripheral 3 and provide the machine body information to a serviceman. As a result, the serviceman can easily grasp the state of the label printer that has no communication function with the center server 7, and can perform maintenance of the label printer at an appropriate time.

As described above, the digital multi-functional peripheral serving as the image forming device according to the embodiment communicates with the label printer and receives the machine body information from the label printer. If the received machine body information exceeds the reference value, the digital multi-functional peripheral creates the maintenance information about the label printer based on the machine body information that exceeds the reference value. If the maintenance information about the label printer is created, the digital multi-functional peripheral transmits the created maintenance information about the label printer to the center server.

Accordingly, the digital multi-functional peripheral can transmit the maintenance information about the label printer including the information that exceeds the reference value to the center server that provides information to a serviceman. As a result, even if a configuration for communicating with the center server is not provided in the label printer, the digital multi-functional peripheral can perform maintenance management including failure prediction for the label printer. The serviceman can check the maintenance information about the label printer presented by the center server that stores information received from the digital multi-functional peripheral. As a result, the serviceman can grasp the state of the label printer before performing actual maintenance.

The digital multi-functional peripheral encrypts the maintenance information about the label printer based on the machine body information acquired from the label printer and transmits the encrypted maintenance information to the center server. Accordingly, even if a configuration for securely communicating with the center server is not provided in the label printer, the digital multi-functional peripheral can safely transmit the maintenance information about the label printer to the center server.

If there is information that exceeds the reference value in the machine body information about the label printer, the digital multi-functional peripheral displays, on the display device, a warning indicating that there is information exceeding the reference value in the label printer. Accordingly, a user can easily recognize that there is information exceeding the reference value in the machine body information about the label printer on the operation panel of the digital multi-functional peripheral.

Next, an operation of the label printer 5 that communicates with the digital multi-functional peripheral 3 serving as the image forming device in the information transmission system 1 according to the embodiment will be described.

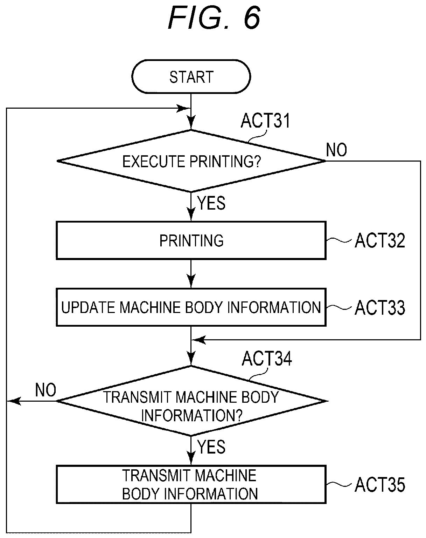

FIG. 6 is a flowchart illustrating an operation example of the label printer 5 that communicates with the digital multi-functional peripheral 3 serving as the image forming device according to the embodiment.

The processor 51 of the label printer 5 receives an execution instruction for printing processing using the printing mechanism 56 that is input to the operation unit 55 (ACT 31). If there is no printing execution instruction (NO in ACT 31), the processor 51 of the label printer 5 proceeds the operation to ACT 34.

If the printing execution instruction is input (ACT 31, YES), the processor 51 of the label printer 5 executes the printing processing using the printing mechanism 56 (ACT 32). If the printing processing is executed, the processor 51 of the label printer 5 collects information indicating an operation state from the printing mechanism 56 or the like. For example, the processor 51 collects information such as a printing distance, an ON time of the thermal head 59, and detection information about the sensor 58. If the processor 51 collects information indicating the operation state associated with the execution of the printing processing, the processor 51 updates the machine body information stored in the memory 52 based on the collected information (ACT 33).

The processor 51 of the label printer 5 determines whether to transmit the machine body information stored in the memory 52 to the digital multi-functional peripheral 3 (ACT 34). For example, if the processor 51 receives a transmit request of the machine body information from the digital multi-functional peripheral 3, the processor 51 determines to transmit the machine body information stored in the memory 52. The processor 51 may determine to transmit the machine body information to the digital multi-functional peripheral 3 each time the printing processing is executed. Further, the processor 51 may determine to transmit the machine body information at both a timing when the transmission request is received from the digital multi-functional peripheral 3 and a timing when the printing processing is executed.

If it is not a timing to transmit the machine body information (ACT 34, NO), the processor 51 of the label printer 5 returns the operation to ACT 31 and repeats the above-described processing. If it is determined that the machine body information is to be transmitted (ACT 34, YES), the processor 51 transmits the machine body information stored in the memory 52 to the digital multi-functional peripheral (ACT 35).

As described above, in the information transmission system according to the embodiment, the label printer communicates with the digital multi-functional peripheral having a function of communicating with the center server. The label printer transmits the machine body information indicating an operation state of each unit to the digital multi-functional peripheral. If the machine body information received from the label printer exceeds the reference value, the digital multi-functional peripheral transmits maintenance information about the label printer created based on the machine body information that exceeds the reference value to the center server.

Accordingly, the digital multi-functional peripheral can execute failure prediction or the like for the label printer, and the maintenance information about the label printer including the information that exceeds the reference value can be transmitted to the center server. As a result, the center server can manage the maintenance information about the label printer, and can provide information indicating the state of the label printer to a serviceman. As a result, it is possible to prevent an increase in cost of the label printer, notify the serviceman of the state of the label printer, and improve convenience for maintenance and the like.

While certain embodiments have been described, these embodiments have been presented by way of example only, and are not intended to limit the scope of the disclosure. Indeed, the novel embodiments described herein may be embodied in a variety of other forms; furthermore, various omissions, substitutions and changes in the form of the embodiments described herein may be made without departing from the scope of the disclosure as defined by the appended claims. The accompanying claims and their equivalents are intended to cover such forms or modifications as would fall within the scope of the disclosure.

## Claims

1. An image forming device, comprising:
a first communication interface configured to communicate with a printer device to be maintained;
a second communication interface configured to communicate with a center server that manages maintenance information for the printer device; and
a processor configured to transmit, according to machine body information received from the printer device through the first communication interface, the maintenance information about the printer device created based on the machine body information sent to the center server through the second communication interface.

2. The image forming device according to claim 1, wherein
the printer device is a label printer.

3. The image forming device according to claim 1 or 2, wherein
the processor transmits, to the center server, data obtained by encrypting the maintenance information about the printer device in a manner allowing the center server to decrypt the maintenance information.

4. The image forming device according to any of claims 1 to 3, further comprising:
a display, wherein
the processor displays a warning, which is based on the machine body information, on the display according to the machine body information received from the printer device.

5. The image forming device according to any of claims 1 to 4, wherein
the maintenance information is based on a failure prediction in the printer device.

6. The image forming device according to any of claims 1 to 5, wherein
the first communication interface is configured to communicate with a plurality of printer devices to be maintained.

7. A communication method, comprising:
communicating with a printer device to be maintained through a first communication interface;
communicating with a center server that manages maintenance information for the printer device through a second communication interface; and
transmitting, via a processor, according to machine body information received from the printer device through the first communication interface, the maintenance information about the printer device created based on the machine body information sent to the center server through the second communication interface.

8. The communication method according to claim 7, wherein
the printer device is a label printer.

9. The communication method according to claim 7 or 8, further comprising:
transmitting, to the center server, data obtained by encrypting the maintenance information about the printer device in a manner allowing the center server to decrypt the maintenance information.

10. The communication method according to any of claims 7 to 9, further comprising:
displaying a warning, which is based on the machine body information, on a display according to the machine body information received from the printer device.

11. The communication method according to any of claims 7 to 10, wherein
the maintenance information is based on a failure prediction in the printer device.

12. The communication method according to any of claims 7 to 11, further comprising:
communicating with a plurality of printer devices to be maintained.

13. An information transmission system, comprising:
an image forming device according to any of claims 1 to 12; and
a printer device, wherein
the machine body information includes information indicating an operation state of the printer device, and
the printer device includes
a third communication interface configured to communicate with the image forming device, and
a second processor configured to transmit the machine body information to the image forming device through the third communication interface.

14. The information transmission system according to claim 13, comprising a plurality of printer devices, each printer device includes
a third communication interface configured to communicate with the image forming device, and
a second processor configured to transmit the machine body information to the image forming device through the third communication interface.
